# EUROPÄISCHE PATENTSCHRIFT

(11) **EP 3 600 831 B1**
(45) Veröffentlichungstag und Bekanntmachung des Hinweises auf die Patenterteilung: **06.09.2023**
(21) Anmeldenummer: 18720083.7
(22) Anmeldetag: 22.03.2018
(51) Int. Cl.: B29C 63/02, B60R 13/02, B29C 65/48, B32B 37/12

(54) **VORRICHTUNG, ANLAGE UND VERFAHREN ZUM AUFKASCHIEREN EINES KASCHIERFOLIENELEMENTS AUF EIN BAUTEIL**
DEVICE, SYSTEM AND METHOD FOR LAMINATING A LAMINATING FOIL ELEMENT ONTO A COMPONENT
DISPOSITIF, INSTALLATION ET PROCÉDÉ SERVANT À APPLIQUER PAR CONTRECOLLAGE UN ÉLÉMENT PELLICULAIRE DE CONTRECOLLAGE SUR UN COMPOSANT

(30) Priorität: 22.03.2017 DE 102017002772; 23.06.2017 DE 102017005923
(43) Veröffentlichungstag der Anmeldung: 05.02.2020
(73) Patentinhaber: Persico S.p.A., 24027 Nembro (BG) (IT)
(72) Erfinder: DANDL, Andreas, 83410 Laufen (DE); REHRL, Josef, 83317 Teisendorf (DE); REHRL, Hubert, 83317 Teisendorf (DE)
(74) Vertreter: Tirloni, Bartolomeo
(86) Internationale Anmeldenummer: PCT/DE2018/000070
(87) Internationale Veröffentlichungsnummer: WO 2018/171826

(56) Entgegenhaltungen:
- WO-A1-2014/131918
- FR-A1- 2 757 103
- FR-A1- 2 863 195
- US-A- 3 753 830
- US-A- 5 201 981
- US-A- 5 700 542

## Beschreibung

Die Erfindung betrifft eine Anlage zum Kaschieren eines Bauteils mit einem Kaschierfolienelement.

Die Erfindung betrifft des Weiteren noch ein Verfahren zum Aufkaschieren eines Kaschierfolienelements auf einem Bauteil.

Insbesondere gattungsgemäße Vorrichtungen, Anlagen zum Kaschieren eines Bauteils mit einem Folienelement, sowie hiermit realisierte Verfahren um hierdurch ein höherwertiges mit einem Folienelement oder ähnlichem kaschiertes Bauteil, wie insbesondere ein KFZ-Verkleidungsteil, herzustellen, sind aus dem Stand der Technik bekannt. US5201981A, FR2757103A1, FR2863195A1 und US3753830A beschreiben Vorrichtungen und Verfahren zum Aufkaschieren eines Kaschierfolienelements auf einem Bauteil.

Bei herkömmlichen Vorrichtungen bzw. Verfahren zum Aufkaschieren von Kaschierfolienelementen auf Bauteilen wird oftmals ein Kaschierfolienelement in seiner Gesamtheit aufkaschiert, wodurch sich nachgelagerte Verfahrensschritte oftmals aufwendiger gestalten.

Insbesondere bei aktuellen Vorrichtungen bzw. Verfahren zum Auftragen von Klebstoff auf eine Oberfläche eines Kaschierfolienelements zum Kaschieren etwa eines KFZ-Verkleidungsteils bzw. gattungsgemäße Anlagen zum Kaschieren eines Bauteils mit einem Kaschierfolienelement wird Klebstoff ist auf die ganze Folie aufgetragen. Mit anderen Worten, die Seite des Kaschierfolienelements, welche mit dem Bauteil in Wirkkontakt gebracht wird, wird zuvor großflächig mit Klebstoff benetzt.

Um bei Bedarf folienfreie Bereiche eines Bauteils nun nicht klebstoffbehaftet zu kaschieren, muss im Nachhinein ein nicht unerheblicher verfahrenstechnischer wie auch konstruktiver Aufwand betrieben werden, mittels welchen erreicht werden kann, dass bestimmte Bereiche des Kaschierfolienelements nicht oder zumindest nicht dauerhaft kaschiert sind, also dass diese Bereiche teilweise von dem Kaschierfolienelement wiederbefreit werden.

Allgemein werden die hierbei eingesetzten Werkzeuge jedoch um ca. 40% teurer, wobei ferner auch Kleber auf den nicht kaschierten Bereichen des Bauteils ebenfalls zu Abfall wird, was wiederum die Kosten der Herstellung von kaschierten Bauteilen, insbesondere von KFZ-Verkleidungsteilen, zusätzlich in die Hohe treibt. Auch wird die Umwelt durch diesen Kleberabfall zusätzlich belastet.

Es ist Aufgabe der Erfindung zumindest die vorstehend genannten Nachteile zu überwinden und gattungsgemäße Vorrichtungen und Verfahren dementsprechend weiterzuentwickeln.

Die Aufgabe wird nach einem Aspekt der Erfindung durch eine Vorrichtung nach Anspruch 1 gelöst.

Vorteilhafterweise ist durch die Auslenkeinrichtung zum bereichsweisen Auslenken des Kaschierfolienelements aus der profilierten Kaschierebene ermöglicht, dass selbst mit Klebstoff versehene Bereiche des Kaschierfolienelements zumindest temporär nicht oder nur unkritisch mit dem Bauteil in Wirkkontakt treten.

Vorteilhafterweise treten somit nicht zu kaschierende Bereiche des Bauteils und ein Kaschierfolienelement nicht oder nicht fest verbindbar, beispielsweise erst nachdem ein Klebstoff eine hinreichende Klebewirkung nicht mehr besitzt, miteinander in Berührungskontakt.

Hierbei zumindest eine Werkzeughälfte der zwei Werkzeughälften die Auslenkeinrichtung umfasst, wobei in der zumindest ein Werkzeughälfte eine Auslenkkavität der Auslenkeinrichtung angeordnet ist. Hierdurch gelingt es auf baulich einfache Weise, eine im Sinne der Erfindung gewünschte temporäre Kontaktvermeidung zwischen nicht zu kaschierenden Bereichen des Bauteils und des Kaschierfolienelements zu erzielen.

Besonders vorteilhaft ist es, wenn Auslenkkavitäten der Auslenkeinrichtung zumindest partiell geriffelten bzw. waffelförmig ausgestalteten Wandungen aufweisen.

Hierdurch kann einerseits eine Oberflächenvergrößerung an dem Werkzeug und insbesondere auch an dem Kaschierfolienelement erzielt werden, wodurch wiederum eine effektivere Kühlung des dort vorhandenen Klebstoffs erreicht wird.

Hierdurch wiederum wird die Gefahr eines unbeabsichtigten Verklebens von Kaschierfolienelement und Trägerelement in nicht zu kaschierenden Bereichen des Bauteils signifikant reduziert.

Darüber hinaus wird hierdurch eine bessere Eigenstabilität an dem Kaschierfolienelement erzielt.

Zum schnelleren und besseren Abkühlen von Klebstoffen ist es vorteilhaft, wenn Auslenkkavitäten der Auslenkeinrichtung gekühlt sind.

Insofern sieht eine bevorzugte Ausführungsvariante kumulativ oder alternativ eine Fluidspüleinrichtung an der Vorrichtung vor, mittels welcher Zwischenräume zwischen dem zu kaschierenden Trägerteil bzw. Bauteil und dem Kaschierfolienelement mit einem Fluid, vorzugsweise mit Luft, gespült werden können. Hierdurch kann eine noch effektivere Kühlung von Seiten des Klebstoffs erzielt werden.

Eine bauliche einfache Trennung der Auslenkkavitäten von umliegenden Bereichen kann dadurch einfach erzielt werden, wenn Auslenkkavitäten der Auslenkeinrichtung mittels Dichtungselemente von Kaschierkontaktbereichen räumlich getrennt sind.

Sind Auslenkkavitäten der Auslenkeinrichtung als Unterdruckkavitäten ausgestaltet, kann das Kaschierfolienelement partiell besonders einfach im Sinne der Erfindung ausgelenkt werden.

Es versteht sich, dass die vorliegende Auslenkeinrichtung unterschiedlichste ausgestalte sein kann. Die Auslenkeinrichtung lässt sich sehr gut in die vorliegende Vorrichtung integrieren, wenn an der Vorrichtung bzw. an einem diesbezüglichen Kaschierwerkzeug eine Druckdifferenzeinrichtung vorhanden ist, wobei das Kaschierwerkzeug derart eingerichtet ist, dass mittels der Druckdifferenzeinrichtung wenigstens ein Bereich des Bauteils aus einer Kaschierebene, insbesondere aus einer profilierten Kaschierebene, des Kaschierwerkzeugs in die Auslenkkavität auslenkbar ist.

Die Begrifflichkeit "Klebstoff" erfasst vorliegend Adhäsionsmittel, mittels welchen eine besonders innige Wirkverbindung zwischen dem aufzukaschierendem Kaschierfolienelement und einem Bauteil bzw. Trägerteil hergestellt werden kann.

Derartige Adhäsionsmittel können in den unterschiedlichsten Formen vorliegen, beispielsweise als spezielle Klebstoff zum bevorzugten Verkleben von Kunststoffen, aber auch als thermoaktivierbarer Klebstoff oder dergleichen.

Der Begriff "Kaschierfolienelement" beschreibt im Sinne der Erfindung ein Element, welches auf ein Bauteil aufkaschierbar ist, um ein optisch wie auch haptisch hochwertig anmutendes Produkt zu erhalten, wie etwa ein KFZ-Verkleidungsteil oder dergleichen. Somit verkörpert das Kaschierfolienelement eine Dekorlage zum Veredeln eines Bauteils. In der Regel wird dieses Kaschierfolienelement als Folienbahn und bevorzugt als vorkonfektionierte Folie bereitgestellt.

Insofern beschreibt der Ausdruck "Bauteil" das eigentliche Trägerteil, welches letztendlich das Kaschierfolienelement tragt, und welches im Allgemeinen ein nach dem Kaschierprozess fertig produziertes Produkt, wie speziell ein KFZ-Verkleidungsteil, darstellt.

Die Aufgabe der Erfindung wird nach einem Aspekt der Erfindung auch von einer Anlage zum Kaschieren eines Bauteils mit einem Kaschierfolienelement nach Anspruch 9 gelöst. Ist die Kaschieranlage mit der vorliegenden Vorrichtung zum Auftragen ausgerüstet, können die Bauteile vorteilhafter mit Kaschierfolienelemente kaschiert werden.

Bevorzugt sind die Transporteinrichtung zum Transportieren des Kaschierfolienelements zu der Vorrichtung zum Aufkaschieren und die Transporteinrichtung zum Erzeugen einer Relativbewegung zwischen der Auftragseinrichtung und dem Kaschierfolienelement identisch, wodurch sich der konstruktive Aufwand zum Bereitstellen der Anlage und insbesondere der Vorrichtung zum Auftragen von Klebstoff erheblich vereinfachen lässt.

Ferner kann sich die Anlage noch durch eine entweder in der Vorrichtung zum Aufkaschieren integrierte Stanzeinrichtung oder eine geeignete nachgeschaltete Stanzeinrichtung auszeichnen, um das kaschierte Kaschierfolienelement auszustanzen.

Die Aufgabe der Erfindung wird nach einem Aspekt der Erfindung zusätzlich durch ein Verfahren zum Aufkaschieren eines Kaschierfolienelements auf ein Bauteil nach Anspruch 11 gelöst.

Hiermit kann sowohl auf verfahrenstechnischer als auch auf vorrichtungstechnischer Ebene sehr betriebssicher and kostengünstig ein folienfreier Bereich an einem ansonsten kaschierten Bauteil erzeugt werden, der im Endergebnis nicht durch das Kaschierfolienelemente kaschiert ist.

Insbesondere wird eine bevorzugte Verfahrensvariante vorgeschlagen, bei welcher das Gebiet hinsichtlich des designierten folienfreien Bereichs gegenüber weiteren umliegenden Bereichen des Kaschierfolienelementes drucktechnisch abgegrenzt wird, bei welchem dieses drucktechnisch abgegrenzte Gebiet während des Aufkaschierens mittels eines Vakuums in die Auslenkkavität derart ausgelenkt wird, dass dieses Gebiet während des Aufkaschierens des Kaschierfolienelements auf das Bauteil nicht oder nur unzureichend mit dem Bauteil in Kontakt kommt, sodass das Gebiet nach dem Aufkaschieren leichter von dem Bauteil entfernt werden kann.

Der designierte folienfreie Bereich wird als Gebiet bevorzugt als ein separater Vakuumkreis von den umliegenden Bereichen des Kaschierfolienelements abgetrennt.

Hierzu dienen zusätzliche Dichtungselemente in einem herkömmlichen Kaschierwerkezug, insbesondere in einem Vakuumkaschierwerkzeug.

Bevorzugt wird dann während des Kaschierens das sich mit dem separaten Vakuumkreis abgetrennte Gebiet vorzugsweise innerhalb einer Oberschale des Kaschierwerkzeugs ausgelenkt.

Hierdurch entsteht ein zusätzlicher geometrischer Abstand zwischen dem Gebiet des Kaschierfolienelements and dem zu kaschierenden Bauteil, so dass dort eine Kaschierung verhindert ist.

Mit anderen Worten wird mittels einer zusätzlichen Auslenkung verhindert, dass das mit Klebstoff beaufschlagte Kaschierfolienelement bzw. der Klebstoff mit dem Bauteil in wirklichen Klebekontakt kommen kann.

Vorzugsweise weist ein hierfür geeignetes Werkzeug, insbesondere eine Oberschale, in dem Gebiet eine Oberflächenvergrößerungsgestalt, wie etwa eine Waffelstruktur, zur besseren Kühlung auf.

Besonders zweckmäßig ist es, wenn das erste Werkzeughälfte insbesondere im Bereich der Auslenkkavität derart gekühlt wird, dass ein in diesem Gebiet auf das Kaschierfolienelement aufgetragener Klebstoff sein Klebevermögen verliert oder sich sein Klebevermögen zumindest signifikant reduziert.

Hierdurch kann noch effektiver gewährleistet werden, dass sich das Gebiet nicht mit dem Bauteil verbindet, so dass dieses Gebiet leicht von dem Bauteil entfernt werden kann, so dass an dem letztendlich fertig kaschierten Bauteil ein folienfreier Bereich geschaffen ist.

Um letztendlich das Verfahren gemäß der vorliegenden Erfindung problemlos realisieren zu können, ist es vorteilhaft, wenn ein Kaschierwerkzeug eine Auslenkkavität aufweist, in welche Bereiche eines Kaschierfolienelements vor oder während des Kaschierens auf ein Trägerteil bzw. Bauteil auslenkbar sind.

Eine Auslenkung kann hierbei mittels Unterdrucks bzw. Vakuums eines Druckdifferenzgebers an der Auslenkkavität erfolgen.

Darüber hinaus ist auch ohne die Übrigen Merkmale der Erfindung vorteilhaft, wenn Zwischenräume zwischen einem zu kaschierenden Trägerteil bzw. dem Bauteil und dem Kaschierfolienelement mit einem Fluid, insbesondere mit Luft, gespült werden, wodurch ein Klebstoff schneller und damit effektiver abgekühlt werden kann, so dass ein unbeabsichtigter Klebekontakt zwischen Kaschierfolienelement und Trägerelement vermieden werden kann.

Dies ist insbesondere bei geschlossenem Kaschierwerkzeug vorteilhaft, da hierdurch keine oder nur eine vernachlässigbare Verzögerung im Prozessablauf entsteht.

Es versteht sich, dass Merkmale der vorstehend bzw. in den Ansprüchen beschriebenen Lösungen gegebenenfalls auch kombiniert werden können, um die vorliegend erzielbaren Vorteile und Effekte entsprechend kumuliert umsetzen zu können.

Jedenfalls zeichnet sich die vorliegende Erfindung auch dadurch aus, dass mittels einer Auslenkeinrichtung Bereiche eines Kaschierfolienelements aus einer durch ein Trägerteilprofil vorgegebenen Kaschierebene, in welcher ein Kaschierfolienelement auf ein Trägerteil bzw. Bauteil aufkaschiert wird, derart ausgelenkt wird, dass an dem Bauteil letztendlich sehr einfach folienfreie Bereiche herstellbar sind.

An dieser Stelle sei noch erwähnt, dass im Rahmen der hier vorliegenden Patentanmeldung der Ausdruck "insbesondere" immer so zu verstehen sei, dass mit diesem Ausdruck ein optionales, bevorzugtes Merkmal eingeleitet wird. Der Ausdruck ist nicht als "und zwar" und nicht als "nämlich" zu verstehen.

Ferner sei darauf hingewiesen, dass im Rahmen der hier vorliegenden Patentanmeldung unbestimmte Artikel und unbestimmte Zahlenangaben wie "ein...", "zwei..." usw. im Regelfall als mindestens-Angaben zu verstehen sein sollen, also als "mindestens ein...", "mindestens zwei..." usw., sofern sich nicht etwa aus dem Kontext oder dem konkreten Text einer bestimmten Stelle ergibt, dass etwa dort nur "genau ein...", "genau zwei..." usw. gemeint sein soll.

Zusätzlich sind weitere Merkmale, Effekte und Vorteile vorliegender Erfindung anhand anliegender Zeichnung und nachfolgender Beschreibung erläutert, in welchen eine Vorrichtung zum Aufkaschieren eines Kaschierfolienelements dargestellt und beschrieben ist.

Komponenten, welche in den einzelnen Figuren wenigstens im Wesentlichen hinsichtlich ihrer Funktion übereinstimmen, können hierbei mit gleichen Bezugszeichen gekennzeichnet sein, wobei die Komponenten nicht in allen Figuren beziffert und erläutert sein müssen.

In der Zeichnung zeigen:
Figur 1 schematisch eine perspektivische Ansicht eines mit einem Kaschierfolienelement zu kaschierendem Bauteil bzw. der Kaschierfolie mit darunter angeordnetem Bauteil;
Figur 2 schematisch eine teilweise geschnittene Ansicht einer Vorrichtung zum Aufkaschieren eines Kaschierfolienelements mit einem geöffneten Kaschierwerkzeug umfassend eine Auslenkeinrichtung zum Auslenken des Kaschierfolienelements aus einer profilierten Kaschierebene;
Figur 3 schematisch eine teilweise geschnittene weitere Ansicht der in der Figur 2 gezeigten Vorrichtung mit einem sich schließenden Kaschierwerkzeug;
Figur 4 schematisch eine teilweise geschnittene weitere Ansicht der in den Figuren 2 und 3 gezeigten Vorrichtung mit geschlossenem Kaschierwerkzeug;
Figur 5 schematisch eine Ansicht des mit dem in den Figuren 2 bis 4 gezeigten Kaschierwerkzeug umgeformten und kaschierten Kaschierfolienelements in der oberen Werkzeughälfte des Kaschierwerkzeugs; und

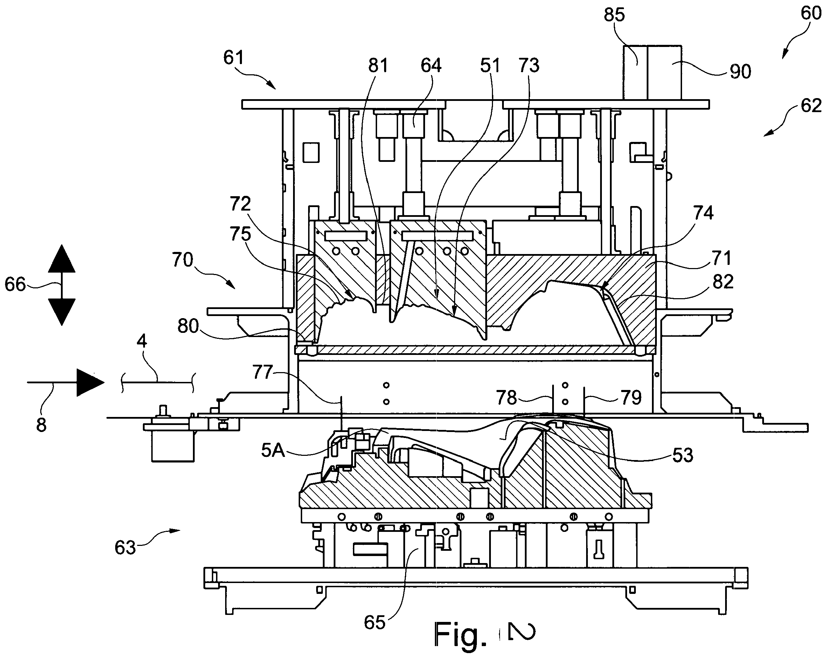

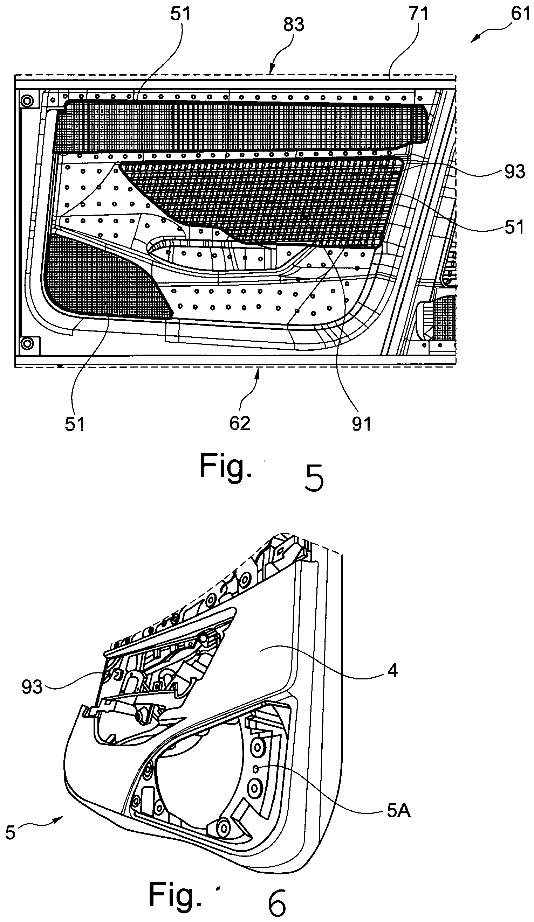

Figur 6 schematisch eine Ansicht des mit der Vorrichtung aus den Figuren 2 bis 5 kaschierten Bauteils mit bereits herausgetrennten anders strukturierten Bereichen. Bei dem nur beispielhaft im Zusammenhang mit vorliegender Erfindung gezeigten Bauteil 5 kann es sich um ein beliebiges Bauteil 5 handeln, welches unterschiedlichste verwendet werden kann. Bevorzugt handelt es sich bei dem vorliegenden Bauteil 5 um ein KFZ-Verkleidungsteil, wie insbesondere ein KFZ-Innenverkleidungsteil, welches durch das Kaschierfolienelement 4 veredelt werden soll. Insofern kann das Kaschierfolienelement 4 als eine Dekorlage (nicht nochmals beziffert) angesehen werden, um optisch, aber meist auch haptisch einen höherwertigen Eindruck zu vermitteln.

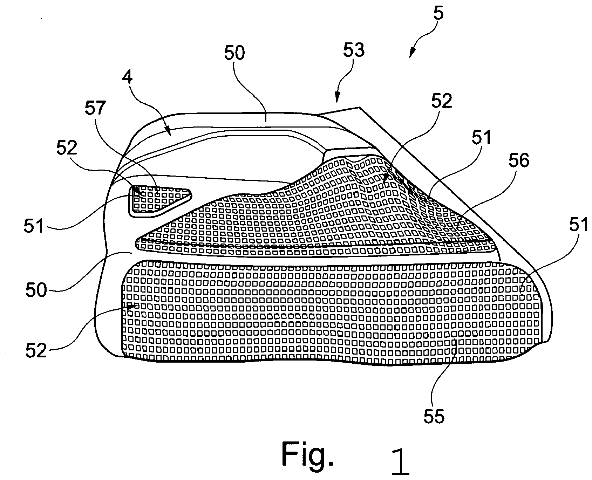

Gemäß der Darstellung nach der Figur 1 ist beispielhaft das bereits vorstehend erwähnte Bauteil 5 mit dem hierauf teilweise aufkaschierten Kaschierfolienelement 4 dargestellt, wobei es sich bei diesem Ausführungsbeispiel um ein KFZ-Innenverkleidungsteil (nicht gesondert beziffert) handelt. Das hierbei teilweise aufkaschierte Kaschierfolienelement 4 besitzt hierbei dauerhaft auf das Bauteil 5 aufkaschierte Bereiche 50 (nur exemplarisch beziffert), welche im Wesentlichen glatt ausgebildet sind, sowie nicht auf das Bauteil 5 aufkaschierte Bereiche 51, welche anders strukturiert sind.

Gut zu erkennen sind bei diesem Ausführungsbeispiel Bereiche (nur exemplarisch beziffert) des Bauteils 5, auf welche klebstoffbehaftete Bereiche 50 des Kaschierfolienelements 4 dauerhaft aufkaschiert werden sollen, also die dauerhaft mit einem Kaschierfolienelement 4 zu kaschierenden Bereiche 50. Demgegenüber erkennt man anders strukturierte Bereiche 51 (ebenfalls nur exemplarisch beziffert) des Bauteils 5 bzw. des darauf aufkaschierten Kaschierfolienelements 4, welche letztendlich als folienfreie Bereiche 52 ausgestaltet sein sollen. Mit anderen Worten bedeutet dies, dass an den anders strukturierten Bereichen 51 später die folienfreien Bereiche 52 des Bauteils 5 liegen, wenn die strukturierten Bereiche 51 herausgerissen sind.

Die anders strukturierten Bereiche 51 sind hierbei dadurch entstanden, dass diese anders strukturierten Bereiche 51 in eine entsprechend mit einer Auslenkkavität versehenen Werkzeughälfte eines Kaschierwerkzeugs ausgelenkt bzw. eingesogen wurden, um einen klebewirksamen Kontakt zwischen Bauteiloberfläche und kleberbehafteter Oberfläche des Kaschierfolienelements 4 zu verhindern oder zu reduzieren

Das Bauteil 5 definiert eine profilierte Kaschierebene 53, auf welcher das Kaschierfolienelement 4 letztendlich unter Umgehung der folienfreien Bereiche 52 dauerhaft aufkaschiert werden soll.

Vorteilhafterweise kann das in der Figur 1 nur beispielhaft gezeigte Bauteil 5 im Wesentlichen hinsichtlich jedem der der Erfindung zugrunde liegenden Aspekt erzeugt werden. An dieser Stelle sei noch erwähnt, dass an den Stellen der hier noch dargestellten anders strukturierten Bereiche 51 später ein sogenanntes Brüstungsfeld 55, ein Türmittelfeld 56 sowie ein Lautsprecherfeld 57, oder dergleichen vorhanden sind.

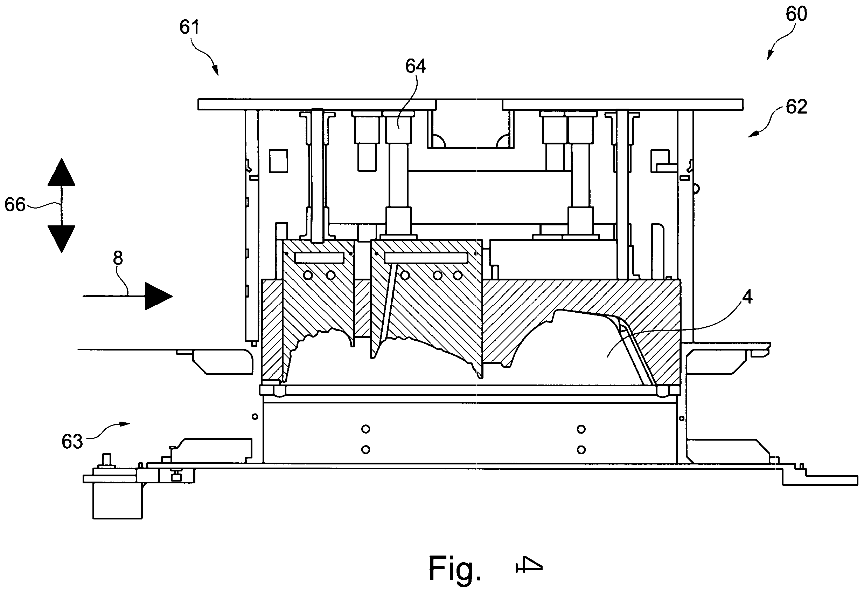

Gemäß der Figuren 2 bis 4 sind eine Vorrichtung 60 zum Aufkaschieren eines Kaschierfolienelements 4 sowie ein hiermit kaschiertes Bauteil 5 (vgl. Figur 4) gezeigt.

Gemäß der Darstellung nach der Figur 2 ist die Vorrichtung 60 mit einem geöffneten Kaschierwerkzeug 61 umfassend eine erste Werkzeughälfte 62 (obere Werkzeughälfte) und umfassend eine zweite Werkzeughälfte 63 (untere Werkzeughälfte) dargestellt.

Die beiden Werkzeughälften 62 und 63 sind mittels Hydraulikzylinder 64 bzw. 65 gemäß Schließ- und Offenrichtung 66 aufeinander zu und voneinander fort bewegbar in der Vorrichtung 60 angeordnet.

An der zweiten Werkzeughälfte 63 ist ein Trägerteil 5A gehaltert, welches mit dem Kaschierfolienelement 4 zusammen das letztendlich kaschierte Bauteil 5 bildet Das Kaschierfolienelement 4 wird dem Kaschierwerkzeug 61 gemäß Maschinenrichtung 8 als noch flaches Folienelement (nicht gesondert beziffert) zugeführt, wobei die Maschinenrichtung 8 in diesem Ausführungsbeispiel beispielhaft von links nach rechts verlaufend dargestellt ist.

Die Vorrichtung 60 weist eine Auslenkeinrichtung 70 zum bereichsweisen Auslenken des Kaschierfolienelements 4 aus der profilierten Kaschierebene 53 heraus auf.

Die profilierte Kaschierebene 53 verläuft in diesem Ausführungsbeispiel zusammen mit der Oberfläche des Trägerteils 5A, wobei die beiden Werkzeughälften 62 und 63 entsprechende Schalenelemente 71 (nur an erster Werkzeughälfte 62 beziffert) umfassen, welche die profilierte Kaschierebene 53 ebenfalls abbilden.

Die Auslenkeinrichtung 70 umfasst in diesem Ausführungsbeispiel mehrere Auslenkkavität en 72, 73 und 74, deren Öffnungen (hier nicht gezeigt) sich bevorzugt in oder parallel zu der profilierte Kaschierebene 53, insbesondere mit ihren Öffnungsdurchmesser-konturen, erstrecken.

Die Auslenkkavität en 72, 73 und 74 (nur schematisch angedeutet) werden von zumindest partiell geriffelten bzw. waffelförmig ausgestalteten Wandungen 75 (nur exemplarisch beziffert) begrenzt.

Diese zumindest partiell geriffelten bzw. waffelförmig ausgestalteten Wandungen 75 sind durch die erste Werkzeughälfte 62 bzw. deren Schalenelement 71 realisiert.

Ferner weist das Kaschierwerkzeug 61 Dichtungselemente 77, 78, 79 (nur beispielhaft dargestellt) in Gestalt von Dichtschwertern oder dergleichen auf, um die Auslenkkavitäten 72, 73 und 74 von Kaschierbereichen 80, 81 bzw. 82 differenzdrucktechnisch abzudichten, zumindest in einem geschlossenen oder annähernd geschlossenen Zustand des Kaschierwerkzeugs 61.

Die Dichtungselemente 77, 78, 79 sind in Gestalt von Dichtschwertern oder dergleichen wandförmig ausgestaltet, wegen der Schnittdarstellung jedoch nur als Striche dargestellt.

Hierdurch bilden sich an den Auslenkkavitäten 72, 73 und 74 bzw. an dem Kaschierfolienelement 4 Dichtkanten 83 (siehe beispielhaft Figur 5) mit einer Stärke von mehr als 1,5 mm, insbesondere von ca. 3,5 mm, aus, welche später als Aufsatzbeschnitt-Schulter zum Ausschneiden des Kaschierfolienelements 4 verwendet werden können. Die Stärke der Dichtkanten 83 ist hierbei bevorzugt geringer als 10 mm. Jedenfalls werden mit den derart räumlich abgetrennten Auslenkkavitäten 72, 73 und 74 nicht kaschierbare Bereiche, vorzugsweise als anders strukturierte Bereiche 51, insbesondere an dem Kaschierfolienelement 4 erzeugt.

Um die zusätzliche Druckdifferenz speziell innerhalb der Auslenkkavitäten 72, 73 und 74 zu erzeugen, zeichnet sich die Vorrichtung noch durch eine geeignet ausgebildete Druckdifferenzeinrichtung 85 aus, welche hier hinsichtlich ihrer einzelnen Komponenten nur in der Darstellung nach Figur 2 schematisch angedeutet ist.

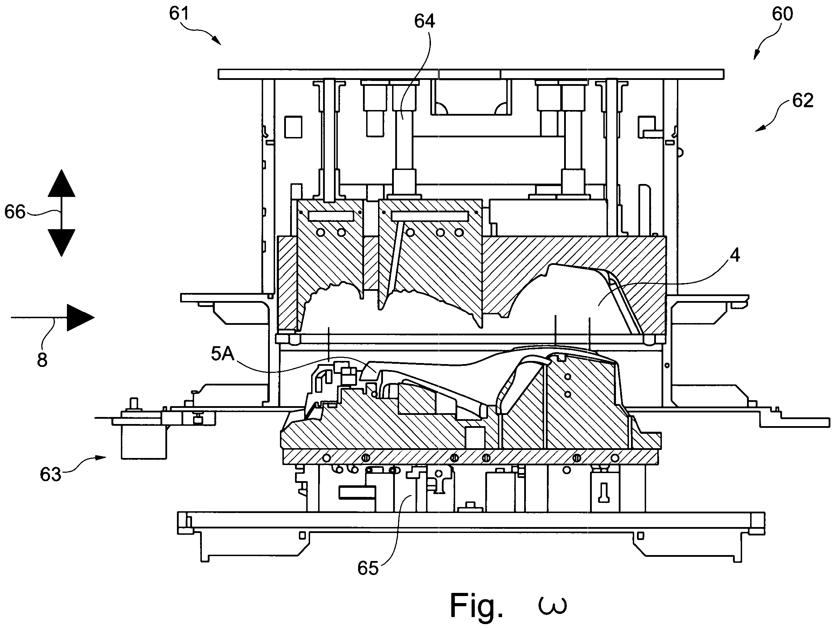

Gemäß der Darstellung nach der Figur 3 ist das Kaschierwerkzeug 61 bereits weitestgehend differenzdruckdicht verschlossen, das Kaschierfolienelement 4 bereits in die erste Werkzeughälfte 62 voreingeblasen, insbesondere an das obere Schalenelement 71 angesaugt bzw. hinsichtlich der nicht zu kaschierenden Bereiche anschließend noch bis in die Auslenkkavitäten 72, 73 und 74 zusätzlich hinein gesaugt. Hierdurch entstehen letztendlich die anders strukturierte Bereiche 51, welche nicht klebekontaktmäßig dauerhaft mit dem Trägerteil 5A in Wirkverbindung treten können.

Verstärkt wird dieser Effekt noch durch eine Kühleinrichtung 86 zum Kühlen dieser anders strukturierten Bereiche 51 bzw. eines dort verhafteten Klebstoffes, so dass dieser Klebstoff sehr zügig abkühlt und hierbei seine Klebewirkung verliert.

Vorteilhafterweise umfasst die Vorrichtung 60 noch eine Fluidspüleinrichtung 90 (Luftspüleinrichtung; siehe nur Figur 2) zum Spülen eines Zwischenraums 91 (siehe Figur 5) zwischen dem zu kaschierenden Trägerteil 5A bzw. Bauteil 5 und dem Kaschierfolienelement 4, vorzugsweise bei geschlossenem Kaschierwerkzeug 61, wenn das Kaschierfolienelement 4 zumindest bereichsweise an das Trägerteil 5A gepresst wird, wie dies gemäß der Darstellung nach der Figur 4 der Fall ist.

Gemäß der Darstellung nach der Figur 5 ist noch eine Unteransicht in die erste Werkzeughälfte hinein mit darin dargestelltem Kaschierfolienelement 4, jedoch ohne Trägerteil 5A, gezeigt.

Hierbei gut zu erkennen sind die anders strukturierten Bereiche 51 (nur beispielhaft beziffert) mit ihrer geriffelten Struktur, welche die nicht kaschierten Bereiche 93 verkörpern. Gemäß der Figur 6 ist das Bauteil 5 mit aufkaschiertem Kaschierfolienelement 4 gezeigt, wobei die anders strukturierten Bereiche 51 allesamt bereits entfernt sind, und hierbei nicht kaschierte Bereiche 93 mit diesbezüglich sichtbaren Trägerteil 5A deutlich am Bauteil 5 zu erkennen sind.

### Bezugszeichenliste:

1 Vorrichtung
2 Klebstoff
3 Oberfläche
4 Kaschierfolienelement
5 Bauteil
5A Trägerteil
6 Bearbeitungsstation
7 Anlage
8 Maschinenrichtung
10 Auftragseinrichtung
11 Auftragsmittel
12 Auftragswalzenelement
13 Klebstoffreservoir
15 Auftragsebene
18 Transporteinrichtung
19 Transportband
20 Auslenkeinrichtung
21 Auslenkrichtung
22 Auslenkbewegung
25 erste kleber- und klebefreie Bereich
26 zweiter kleber- und klebefreie Bereich
27 dritter kleber- und klebefreie Bereich
28 Kontur
29 Gebiete
30 kleberbehaftete Bereiche
31 Klebstoffschicht
33 erste Seite der Auftragsebene
34 zweite Seite der Auftragsebene
35 Druckdifferenzgeber
36 abgewandte Oberfläche
40 Ablageteile
41 Kavitäten
42 Tiefe
43 Ablagefläche
50 Bereiche
51 anders strukturierte Bereiche
52 folienfreie Bereiche
53 profilierte Kaschierebene
55 Brüstungsfeld
56 Türmittelfeld
57 Lautsprecherfeld
60 Vorrichtung zum Kaschieren
61 Kaschierwerkzeug
62 erste Werkzeughälfte bzw. obere Werkzeughälfte
63 zweite Werkzeughälfte bzw. untere Werkzeughälfte
64 obere Hydraulikzylinder
65 untere Hydraulikzylinder
66 Schließ- and Offenrichtung
70 Auslenkeinrichtung
71 Schalenelemente
72 erste Auslenkkavität
73 zweite Auslenkkavität
74 dritte Auslenkkavität
75 Wandungen
77 erster Dichtungselementebereich
78 zweiter Dichtungselementebereich
79 dritter Dichtungselementebereich
80 erster Kaschierbereich
81 zweiter Kaschierbereich
82 dritter Kaschierbereich
83 Dichtkanten
85 Druckdifferenzeinrichtung
86 Kühleinrichtung
90 Fluidspüleinrichtung bzw. Luftspüleinrichtung
91 Zwischenraums
93 nicht kaschierte Bereiche

## Patentansprüche

1. Vorrichtung (60) zum Aufkaschieren eines Kaschierfolienelements (4) auf ein eine profilierte Kaschierebene (53) ausgestaltendes Bauteil (5, 5A), wobei die Vorrichtung (60) ein Kaschierwerkzeug (61) *umfasst,* mittels dessen das Kaschierfolienelement (4) auf das Bauteil (5) aufkaschiert wird, wobei das Kaschierwerkzeug (61) eine erste Werkzeughälfte (62) und eine zweite Werkzeughälfte (63) umfasst, wobei die Vorrichtung (60) eine Auslenkeinrichtung (70) zum Auslenken eines Bereichs (51) des Kaschierfolienelements (4) aus der profilierten Kaschierebene (53) umfasst, *wobei zumindest eine Werkzeughälfte (62) der zwei Werkzeughälften (62, 63) die Auslenkeinrichtung (70) umfasst, wobei in der zumindest einen Werkzeughälfte (62) eine Auslenkkavität (72, 73, 74) der Auslenkeinrichtung (70) angeordnet ist,* **dadurch gekennzeichnet, dass** *die Auslenkkavität (72, 73, 74) der Auslenkeinrichtung (70) mittels Dichtungselementen (77, 78, 79) von Kaschierkontaktbereichen (80, 81, 82) räumlich getrennt ist.*

2. Vorrichtung (60) nach Anspruch 1, **dadurch gekennzeichnet, dass** *die profilierte Kaschierebene (53) zusammen mit einer Oberfläche des Bauteils (5) verläuft, wobei die Werkzeughälften (62, 63) entsprechende Schalenelemente (71) umfassen, welche die profilierte Kaschierebene (53) ebenfalls abbilden.*

3. Vorrichtung (60) nach Anspruch 1 oder 2, **dadurch gekennzeichnet, dass** *die* Auslenkkavität (72, 73, 74) der Auslenkeinrichtung (70) zumindest partiell geriffelten bzw. waffelförmig ausgestalteten Wandungen aufweist.

4. Vorrichtung (60) nach einem der Ansprüche 1 bis 3, **dadurch gekennzeichnet, dass** *die* Auslenkkavität (72, 73, 74) der Auslenkeinrichtung (70) gekühlt *ist.*

5. Vorrichtung (60) nach einem der Ansprüche 1 bis 4, **gekennzeichnet durch** eine Fluidspüleinrichtung (90), mittels welcher Zwischenräume (91) zwischen dem zu kaschierenden Trägerteil (5A) bzw. Bauteil (5) und dem Kaschierfolienelement (4) mit einem Fluid, vorzugsweise mit Luft, gespült werden können.

6. Vorrichtung (60) nach einem der Ansprüche 1 bis 5, **dadurch gekennzeichnet, dass** *die Dichtungselemente (77, 78, 79) an der Auslenkkavität (72, 73, 74) bzw. an dem Kaschierfolienelement (4) Dichtkanten (83) bilden, wobei die Kanten (83) eine Stärke von mehr als 1,5 mm und weniger als 10 mm aufweisen.*

7. Vorrichtung (60) nach einem der Ansprüche 1 bis 6, **dadurch gekennzeichnet, dass** *die* Auslenkkavität (72, 73, 74) der Auslenkeinrichtung (70) als *eine* Unterdruck-Kavität ausgestaltet *ist.*

8. Vorrichtung (60) nach einem der Ansprüche 1 bis 7, **gekennzeichnet durch** eine Druckdifferenzeinrichtung (85), wobei das Kaschierwerkzeug (61) derart eingerichtet ist, dass mittels der Druckdifferenzeinrichtung (85) wenigstens *der* Bereich (51) des Kaschierfolienelements (4) aus *der* profilierten Kaschierebene (53) in die Auslenkkavität (72, 73, 74) auslenkbar ist.

9. Anlage zum Kaschieren eines Bauteils (5) mit einem Kaschierfolienelement (4), umfassend:
- eine Vorrichtung (60) *nach einem der Ansprüche 1 bis 8, und*
- *entweder eine in die Vorrichtung (60) integrierte Stanzeinrichtung oder eine geeignete nachgeschaltete Stanzeinrichtung, um den Bereich (51) des kaschierten Kaschierfolienelements (4) auszustanzen.*

10. *Anlage nach Anspruch 9, weiter umfassend* eine Transporteinrichtung (18) zum Transportieren des Kaschierfolienelements (4) zu der Vorrichtung (60).

11. Verfahren zum Aufkaschieren eines Kaschierfolienelements (4) auf ein Bauteil (5), wobei das Verfahren Folgendes umfasst:
- während des Aufkaschierens des Kaschierfolienelements (4) auf das Bauteil (5), Auslenken eines Bereichs (51) des Kaschierfolienelements (4) aus einer profilierten Kaschierebene (53) des Bauteils (5) *und in eine Auslenkkavität (72, 73, 74) einer Auslenkeinrichtung (70), die in mindestens einer Werkzeughälfte (62) der beiden Werkzeughälften (62, 63) eines Kaschierwerkzeugs (61) angeordnet ist, wobei der Bereich (51)* gegenüber weiteren umliegenden Bereichen (50) des Kaschierfolienelements (4) derart *ausgelenkt wird,* dass der Bereich (51) nicht oder nur unzureichend mit dem Bauteil (5) in Kontakt kommt, *und wobei die Auslenkkavität (72, 73, 74) der Auslenkeinrichtung (70) mittels Dichtungselemente (77, 78, 79) von Kaschierkontaktbereichen (80, 81, 82) räumlich getrennt ist;*
- Entfernen des Bereichs (51) des kaschierten Kaschierfolienelements (4) von den weiteren umliegenden Bereichen (50) des Kaschierfolienelements (4) zum Erhalten des Bauteils (5) mit einem designierten folienfreien Bereich (52).

12. Verfahren nach Anspruch 11, **dadurch gekennzeichnet, dass** das Gebiet hinsichtlich des designierten folienfreien Bereichs (52) *und* gegenüber weiteren umliegenden Bereichen (50) des Kaschierfolienelementes (4) drucktechnisch abgegrenzt wird, bei welchem dieses drucktechnisch abgegrenzte Gebiet während des Aufkaschierens mittels eines Vakuums in *die Auslenkkavität (72, 73,* 74) derart ausgelenkt wird, dass dieses Gebiet während des Aufkaschierens des Kaschierfolienelements (4) auf das Bauteil (5) nicht oder nur unzureichend mit dem Bauteil (5) in Kontakt kommt, sodass das Gebiet nach dem Aufkaschieren leichter von dem Bauteil (5) entfernt werden kann.

13. Verfahren nach Anspruch 11 oder 12, **dadurch gekennzeichnet, dass** *die mindestens eine* Werkzeughälfte (62) insbesondere im Bereich *der Auslenkkavität (72, 73,* 74) derart gekühlt wird, so dass ein in diesem Gebiet auf das Kaschierfolienelement (4) aufgetragener Klebstoff (2) sein Klebevermögen verliert oder sich sein Klebevermögen zumindest signifikant reduziert.

14. Verfahren nach einem der Ansprüche 11 bis 13, **dadurch gekennzeichnet, dass** Zwischenräume (91) zwischen einem zu kaschierenden Trägerteil (5A) bzw. dem Bauteil (5) und dem Kaschierfolienelement (4) mit einem Fluid, insbesondere mit Luft, vorzugsweise bei geschlossenem Kaschierwerkzeug (61), gespült werden.

15. *Verfahren nach einem der Ansprüche 11 bis 14, **dadurch gekennzeichnet, dass** der Bereich (51) des Kaschierfolienelements (4) als ein designierter folienfreier Bereich (52) des Bauteils (5) ausgestaltet ist.*

## Claims

1. Device (60) for laminating a laminating foil element (4) onto a component (5, 5A) having a profiled lamination plane (53), wherein the device (60) comprises a lamination tool (61), by means of which the laminating foil element (4) is laminated onto the component (5), wherein the lamination tool (61) comprises a first tool half (62) and a second tool half (63), wherein the device (60) comprises a deflection arrangement (70) for deflecting a portion (51) of the laminating foil element (4) out of the profiled lamination plane (53), wherein at least one tool half (62) of the two tool halves (62, 63) comprises the deflection arrangement (70), wherein a deflection cavity (72, 73, 74) of the deflection arrangement (70) is arranged in the at least one tool half (62),
**characterized in that** the deflection cavity (72, 73, 74) of the deflection arrangement (70) is spatially separated from laminating portions (80, 81, 82) by means of sealing elements (77, 78, 79).

2. Device (60) according to claim 1, **characterized in that** the profiled lamination plane (53) extends together with a surface of the component (5), wherein the tool halves (62, 63) comprise respective mold elements (71), which also correspond to the profiled lamination plane (53).

3. Device (60) according to claim 1 or 2, **characterized in that** the deflection cavity (72, 73, 74) of the deflection arrangement (70) has at least partially corrugated or waffle-shaped walls.

4. Device (60) according to one of claims from 1 to 3, **characterized in that** the deflection cavity (72, 73, 74) of the deflection arrangement (70) are cooled.

5. Device (60) according to one of claims from 1 to 4, **characterized by** a fluid flushing unit (90) by means of which interspaces (91) between the carrier part (5A) or component (5), respectively, to be laminated and the laminating foil element (4) can be flushed with a fluid, preferably with air.

6. Device (60) according to one of claims from 1 to 5, **characterized in that** the sealing elements (77, 78, 79) form sealing edges (83) on the deflection cavity (72, 73, 74) and at the laminating foil element (4), wherein the edges (83) have a thickness of more than 1.5 mm and lower than 10 mm.

7. Device (60) according to one of claims from 1 to 6, **characterized in that** the deflection cavity (72, 73, 74) of the deflection arrangement (70) is embodied as a vacuum cavity.

8. Device (60) according to one of claims from 1 to 7, **characterized by** a pressure difference unit (85), wherein the lamination tool (61) is embodied such that with the pressure difference unit (85), at least said portion (51) of the laminating foil element (4) can be deflected out of the profiled lamination plane (53) into the deflection cavity (72, 73, 74).

9. System for laminating a component (5) with a laminating foil element (4), comprising:
- a device (60) according to any one of claims from 1 to 8, and
- either a punching device integrated in the device (60) or a suitable downstream punching device for punching out said portion (51) of the laminated laminating foil element (4).

10. System according to claim 9, further comprising a transport unit (18) for transporting the laminating foil element (4) to the device (60).

11. Method for laminating a laminating foil element (4) onto a component (5), wherein the method comprises:
- during lamination of the laminating foil element (4) onto the component (5), deflecting a portion (51) of the laminating foil element (4) out of a profiled lamination plane (53) of the component (5) and into a deflection cavity (72, 73, 74) of a deflection arrangement (70) arranged into at least one tool half (62) of two tool halves (62, 63) of a laminating tool (61), wherein the portion (51) is deflected with respect to other surrounding portions (50) of the laminating foil part (4) such that the portion (51) does not, or only insufficiently, come in contact with the component (5), and wherein the deflection cavity (72, 73, 74) of the deflection arrangement (70) is spatially separated from laminating portions (80, 81, 82) by means of sealing elements (77, 78, 79);
- removing the portion (51) of the laminated laminating foil element (4) from the other surrounding portions (50) of the laminating foil element (4) for obtaining the component (5) with a designated area (52) free from foil.

12. Method according to claim 11, **characterized in that** the area with respect to the designated foil-free portion (52) and with respect to other surrounding portions (50) of the laminating foil element (4) is delimited for printing, wherein, with this method, this portion delimited for printing is deflected during lamination into said deflection cavity (72, 73, 74) by means of a vacuum, such that this area during lamination of the laminating foil element (4) onto the component (5) does not or only insufficiently come in contact with the component (5), such as to be more easily removable from the component (5) after lamination.

13. Method according to claim 11 or 12, **characterized in that** the at least one tool half (62) is cooled in the region of the deflection cavity (72, 73, 74), such that an adhesive (2) applied on the laminating foil element (4) in this area loses its adhesive power, or such that its adhesive power is at least substantially reduced.

14. Method according to one of claims from 11 to 13, **characterized in that** interspaces (91) between a carrier part (5A) or component (5), respectively, to be laminated, and the laminating foil element (4) are flushed with a fluid, in particular with air, preferably with the lamination tool (61) closed.

15. Method according to one of claims from 11 to 14, **characterized in that** the portion (51) of the laminating foil element (4) is embodied as a designated area (52) of the component (5) free from foil.

## Revendications

1. Dispositif (60) servant à appliquer par contrecollage un élément de feuille de contrecollage (4) sur un composant (5, 5A) formant un plan de contrecollage profilé (53), dans lequel le dispositif (60) comprend un outil de contrecollage (61), au moyen duquel l'élément de feuille de contrecollage (4) est appliqué par contrecollage sur le composant (5), dans lequel l'outil de contrecollage (61) comprend un premier demi-outil (62) et un deuxième demi-outil (63),
dans lequel le dispositif (60) comprend un dispositif de déviation (70) pour la déviation d'une zone (51) de l'élément de feuille de contrecollage (4) du plan de contrecollage profilé (53), dans lequel au moins un demi-outil (62) des deux demi-outils (62, 63) comprend le dispositif de déviation (70), une cavité de déviation (72, 73, 74) du dispositif de déviation (70) étant agencée dans l'au moins un demi-outil (62),
**caractérisé en ce que** la cavité de déviation (72, 73, 74) du dispositif de déviation (70) est séparée spatialement des zones de contact de contrecollage (80, 81, 82) au moyen d'éléments de joints d'étanchéité (77, 78, 79).

2. Dispositif (60) selon la revendication 1, **caractérisé en ce que** le plan de contrecollage profilé (53) s'étend avec une superficie du composant (5), dans lequel les demi-outils (62, 63) comprennent des éléments de coque correspondants (71), qui représentent aussi les plans de contrecollage profilés (53).

3. Dispositif (60) selon la revendication 1 ou 2, **caractérisé en ce que** la cavité de déviation (72, 73, 74) du dispositif de déviation (70) comporte au moins partiellement des parois formées de manière rainurée ou gaufrée.

4. Dispositif (60) selon l'une des revendications 1 à 3, **caractérisé en ce que** la cavité de déviation (72, 73, 74) du dispositif de déviation (70) est refroidie.

5. Dispositif (60) selon l'une des revendications 1 à 4, **caractérisé par** un dispositif de nettoyage par fluide (90), au moyen duquel des espaces interstitiels (91) entre la pièce support (5A) ou le composant (5) à contrecoller et l'élément de feuille de contrecollage (4) peuvent être nettoyés avec un fluide, de préférence avec de l'air.

6. Dispositif (60) selon l'une des revendications 1 à 5, **caractérisé en ce que** les éléments de joints d'étanchéité (77, 78, 79) forment des bords étanches (83) à la cavité de déviation (72, 73, 74) ou à l'élément de feuille de contrecollage (4), dans lequel les bords (83) ont une épaisseur de plus de 1,5 mm et moins de 10 mm.

7. Dispositif (60) selon l'une des revendications 1 à 6, **caractérisé en ce que** la cavité de déviation (72, 73, 74) du dispositif de déviation (70) est formée comme une cavité de vide.

8. Dispositif (60) selon l'une des revendications 1 à 7, **caractérisé par** un dispositif de différence de pression (85), dans lequel l'outil de contrecollage (61) est installé de telle sorte que, au moyen du dispositif de différence de pression (85) au moins la zone (51) de l'élément de feuille de contrecollage (4) peut être déviée du plan de contrecollage profilé (53) dans la cavité de déviation (72, 73, 74).

9. Installation pour le contrecollage d'un composant (5) avec un élément de feuille de contrecollage (4), comprenant :
- un dispositif (60) selon l'une des revendications 1 à 8, et
- soit un dispositif de poinçonnage intégré dans le dispositif (60) soit un dispositif de poinçonnage approprié monté en aval, pour poinçonner la zone (51) de l'élément de feuille de contrecollage contrecollé (4).

10. Installation selon la revendication 9, comprenant en outre un dispositif de transport (18) pour le transport de l'élément de feuille de contrecollage (4) vers le dispositif (60).

11. Procédé servant à appliquer par contrecollage un élément de feuille de contrecollage (4) sur un composant (5), dans lequel le procédé comprend ce qui suit :
- pendant l'application par contrecollage de l'élément de feuille de contrecollage (4) sur le composant (5), dévier une zone (51) de l'élément de feuille de contrecollage (4) d'un plan de contrecollage profilé (53) du composant (5) et dans une cavité de déviation (72, 73, 74) d'un dispositif de déviation. (70), qui est agencé dans au moins un demi-outil (62) des deux demi-outils (62, 63) d'un outil de contrecollage (61), dans lequel la zone (51) est déviée par rapport aux autres zones environnantes (50) de l'élément de feuille de contrecollage (4), de telle sorte que la zone (51) n'entre pas en contact ou insuffisamment avec le composant (5), et dans lequel la cavité de déviation (72, 73, 74) du dispositif de déviation (70) est séparée spatialement des zones de contact de contrecollage (80, 81, 82) au moyen d'éléments de joints d'étanchéité (77, 78, 79) ;
- éloigner la zone (51) de l'élément de feuille de contrecollage contrecollé (4) des autres zones environnantes (50) de l'élément de feuille de contrecollage (4) pour l'obtention du composant (5) avec une zone sans feuille désignée (52).

12. Procédé selon la revendication 11, **caractérisé en ce que** la région concernant la zone sans feuille désignée (52) et par rapport aux autres zones environnantes (50) de l'élément de feuille de contrecollage (4) est limitée par une technique de pression, dans lequel cette région délimitée par la technique de pression pendant l'application par contrecollage au moyen d'un vide dans la cavité de déviation (72, 73, 74) est déviée de telle sorte que cette région pendant l'application par contrecollage de l'élément de feuille de contrecollage (4) sur le composant (5) n'entre pas en contact ou insuffisamment avec le composant (5), de sorte que la région peut être éloignée du composant (5) plus facilement après l'application par contrecollage.

13. Procédé selon la revendication 11 ou 12, **caractérisé en ce que** l'au moins un demi-outil (62) en particulier dans la zone de la cavité de déviation (72, 73, 74) est refroidi de telle sorte qu'une colle (2) appliquée dans cette région sur l'élément de feuille de contrecollage (4) perd son pouvoir adhésif ou son pouvoir adhésif se réduit au moins de manière significative.

14. Procédé selon l'une des revendications 11 à 13, **caractérisé en ce que** les espaces interstitiels (91) entre une pièce support (5A) ou le composant (5) à contrecoller et l'élément de feuille de contrecollage (4) sont nettoyés avec un fluide, en particulier avec de l'air, de préférence dans l'outil de contrecollage (61) fermé.

15. Procédé selon l'une des revendications 11 à 14, **caractérisé en ce que** la zone (51) de l'élément de feuille de contrecollage (4) est formée comme une zone sans feuille désignée (52) du composant (5).
